(19) Europäisches Patentamt
European Patent Office
Office européen des brevets

(11) Veröffentlichungsnummer : **0 045 390**
**B1**

(12) # EUROPÄISCHE PATENTSCHRIFT

(45) Veröffentlichungstag der Patentschrift : **11.05.83**

(21) Anmeldenummer : **81105327.1**

(22) Anmeldetag : **09.07.81**

(51) Int. Cl.$^3$ : **C 07 F 7/22**// C04B41/28, D06M13/50

(54) **Monoalkylfluorozinn-Verbindungen.**

(30) Priorität : **01.08.80 DE 3029174**

(43) Veröffentlichungstag der Anmeldung : **10.02.82 Patentblatt 82/06**

(45) Bekanntmachung des Hinweises auf die Patenterteilung : **11.05.83 Patentblatt 83/19**

(84) Benannte Vertragsstaaten : **DE FR GB**

(56) Entgegenhaltungen :
**GB A 917 629**
**JOURNAL OF THE CHEMICAL SOCIETY, 1963, Part V LONDON (GB) ALLESTON et al. : « Organotin Chemistry. Part II 1,2 Compounds of the Composition R4Sn2X20 » Seiten 5469-5475**

(73) Patentinhaber : **SCHERING AKTIENGESELLSCHAFT Berlin und Bergkamen**
**Waldstrasse 14 Postfach 1540**
**D-4619 Bergkamen (DE)**

(72) Erfinder : **Plum, Hans, Dr. Dipl.-Chem.**
**Sulkshege 12**
**D-4700 Hamm (DE)**
Erfinder : **Schröer, Ulrich, Dr. Dipl.-Chem.**
**Meckeweg 4**
**D-4618 Kamen-Methler (DE)**

**EP 0 045 390 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Monoalkylfluorozinn-Verbindungen

Die Erfindung betrifft Monoalkylfluorozinn-Verbindungen, die sich insbesondere zur Beschichtung von mineralischen Oberflächen eignen.

Gegenstand der Erfindung sind Monoalkylfluorozinn-Verbindungen der allgemeinen Formel I

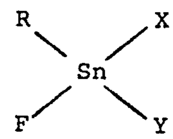 (I)

in der R ein Alkylrest mit 1 bis 12 C-Atomen ist, in der X Fluor oder Carboxylat ist, in der Y Chlor, Carboxylat oder der Rest

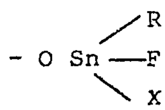

ist oder X und Y zusammen Sauerstoff sind, wobei Y vorzugsweise

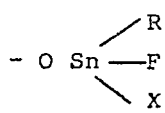

und X Fluor ist.

Besonders bevorzugt sind solche, in denen R Butyl oder Octyl ist.

Die Carboxylatgruppen sind abgeleitet von aliphatischen Monocarbonsäuren mit 1 bis 12 C-Atomen oder aromatischen Carbonsäuren, insbesondere Benzoesäure oder Phthalsäure. Die Carboxylatgruppe ist nicht kritisch hinsichtlich Synthese und Eigenschaften der erfindungsgemäßen Verbindungen.

Die Verbindungen der allgemeinen Formel I, wobei Y =

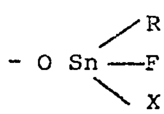

ist, können durch Umsetzung von Alkylstannonsäuren mit Fluorwasserstoff im Molverhältnis 1 : 2 bei 20-100 °C hergestellt werden.

Die Verbindungen der allgemeinen Formel I, wobei X = F und Y = Carboxylat ist, können hergestellt werden, indem man die erhaltenen Stannoxane mit einem Überschuß an Carbonsäuren bei 70-120 °C umsetzt und das entstehende Reaktionswasser entfernt.

Monoalkyldifluorozinnmonocarboxylate können hergestellt werden durch direkte Umsetzung der entsprechenden Stannonsäure, Fluorwasserstoff und einer Carbonsäure im Molverhältnis 1 : 2 : 1 bei einer Temperatur von 70 bis 120 °C.

Monoalkylfluorozinndicarboxylate können hergestellt werden durch direkte Umsetzung der entsprechenden Stannonsäure, Fluorwasserstoff und einer Carbonsäure im Molverhältnis 1 : 1 : 2 bei einer Temperatur von 70 bis 120 °C.

Die Verbindungen der allgemeinen Formel I, wobei X und Y = O sind, können durch Umsetzung von Alkylstannonsäuren mit Fluorwasserstoff im Molverhältnis 1 : 1 bei 20 bis 100 °C hergestellt werden.

Die Verbindungen der allgemeinen Formel I, wobei X = F und Y = Cl ist, werden hergestellt, indem man Organozinntrichloride mit einer wäßrigen Lösung eines Alkalifluorids bei 80 bis 100 °C im Molverhältnis 1 : 2 umsetzt.

Die beanspruchten Verbindungen sind der Übersichtlichkeit halber als Monomere dargestellt. Tatsächlich können sich aber bekanntlich, in Abhängigkeit von den Substituenten am Zinn, insbesondere bei Organozinn-Sauerstoff und Organozinn-Fluor-Verbindungen, polymere Strukturen ausbilden (siehe W. P. Neumann, Die Organische Chemie des Zinns, Ferd.-Enke-Verlag, Stuttgart, 1967, Seiten 13 und 134).

Ferner können in Abhängigkeit vom Alkylrest Stannoxane auch im Gleichgewicht mit den entsprechenden Hydroxiden vorliegen (siehe dazu die Gleichgewichtsbetrachtungen zwischen Hydroxiden und Stannoxanen, z. B. in W. P. Neumann, Die Organische Chemie des Zinns, Ferd.-Enke-Verlag, 1967).

Es zeigte sich, daß die erfindungsgemäßen Verbindungen wesentliche Vorteile zu bisher genutzten Zinnverbindungen aufweisen.

Die erfindungsgemäßen Substanzen können zur Hydrophobierung von Oberflächen verwandt werden ; hierunter fallen z. B. die Textilausrüstung und die Behandlung von mineralischen Oberflächen, beispielsweise bei Bauten.

So bewirkt der im Molekül gebundene Fluoranteil eine wesentlich bessere Haftfestigkeit auf der Mineraloberfläche ; bei Textilausrüstungen ist über Wasserstoffbrückenbindungen zum Fluor eine bessere Haftfestigkeit gegeben.

Als Grundmaterial für hydrophobierende Ausrüstungen eignen sich besonders Sandstein und Gasbeton, ferner Beton und Asbestzement.

Bei Einsatz der erfindungsgemäßen Verbindungen bei hohen Temperaturen wird der Gehalt an unerwünschter Salzsäure in den Pyrolysegasen im Vergleich zu Zinnchlorverbindungen unterdrückt bzw. ganz unterbunden. Da Fluor bei Pyrolyseanwendungen zum Großteil an der Mineraloberfläche verbleibt, wird nur eine wesentlich geringere Menge Flußsäure frei. Diese wirkt auf eisenhaltige Werkteile passivierend, so daß nicht derartig hohe Korrosionsschäden wie bei Chlorwasserstoffsäure zu erwarten sind. Ferner kann die Flußsäure in den Abgasen durch einfache Fällungsreaktionen, z. B. mit Kalk, leicht quantitativ entfernt werden.

Es ist möglich, die erfindungsgemäßen Verbindungen in Lösungen zu handhaben. Ferner haben sie jedoch sehr gute Eigenschaften, wenn sie als Feststoff verarbeitet werden. Als lockere Pulver besitzen sie nicht die unerwünschte Eigenschaft, zusammenzuklumpen.

Im Gegensatz zu einer getrennten Anwendung von Monoalkylzinn-Verbindungen und einer getrennt vorliegenden Fluorverbindung ergibt sich der Vorteil, nur eine einzige Verbindung dosieren zu müssen und somit konstante Elementverhältnisse vorliegen zu haben.

Da bei vielen der aufgeführten Beispiele überraschenderweise auch die Zersetzungstemperatur niedriger liegt, als zum Beispiel bei Dibutylzinndifluorid, ergibt sich für Pyrolyseanwendungen eine Möglichkeit, die Pyrolysetemperatur zu senken. Von sehr großem Vorteil ist ferner, daß bei der Pyrolyse wesentlich weniger Material entweicht als bei Diorganozinn-Verbindungen. Bei einer Aufheizrate von 10 °C pro Minute von Raumtemperatur bis auf 500 °C werden so z. B. bei Bis-(Monobutyldifluoro)-Stannoxan ca. 20 Gew.-% weniger Verlust als bei Dibutylzinndifluorid gemessen, bei Bis-(Monooctyldifluoro)-Stannoxan ca. 15 Gew.-%.

Die angeführten Verbindungen können für sich oder im Gemisch mit Hilfsmitteln (die Feststoffe z. B. mit solchen, die die Rieselfähigkeit günstig beeinflussen, wie Aerosilen) oder komplexiert mit anderen Fluoriden, wie z. B. $NH_4F$, KF oder $SbF_3$, verwandt werden.

## Beispiel 1

Bis-(Monobutyldifluoro)-Stannoxan.

208,7 g Butylstannonsäure werden in 40 g Fluorwasserstoff als 20 %ige Lösung in Wasser eingetragen. Nach Abklingen der exothermen Reaktion wird noch 2 Stunden bei 80-90 °C nachreagieren lassen und dann filtriert. Das scharf abgesaugte Produkt wird bei 60 °C und 80 Torr (106 m bar) bis zu Gewichtskonstanz getrocknet.

Ausbeute : 91 %. Die fehlende Zinnmenge kann aus der Lösung mit überschüssiger NaOH als Butylstannonsäure wieder ausgefällt werden.

Analysen : Sn = 51,99 (ther. 53,5) Gew.-% ; F = 15,3 (17,1) %.

Schmelzpunkt : 203-206 °C.

## Beispiel 2

Bis-(Mono-n-octyldifluoro)-Stannoxan.

79,48 g Octylstannonsäure werden in 30 g 40 %ige HF-Lösung in 100 ml Wasser unter Rühren eingetragen und 2 Stunden bei 80 °C nachgerührt. Nach weiterem Verdünnen mit 50 ml Wasser wird abfiltriert und der Niederschlag getrocknet.

Ausbeute : 85 g (quantitativ).

Analysen : Sn = 41,8 (theor. 42,7) Gew.-% ; F = 12,9 (13,7) %.

Schmelzpunkt : 200 °C.

## Beispiel 3

Bis-(Mono-n-octyldifluoro)-Stannoxan.

In Abänderung zu Beispiel 2 wird ein großer Überschuß HF angewandt (6 Mol HF auf 1 Mol Octylstannonsäure). Wie in Beispiel 2 wird aufgearbeitet.

Im Gegensatz zu Butylstannonsäure, die sich im Überschuß von wäßriger HF klar löst, wird hier nur bis zum Difluorozinnprodukt umgesetzt.

Die Ausbeuten sind nahezu quantitativ.

Analysen : Sn = 41,4 (42,7) Gew.-% ; F = 13,0 (13,7) %.

Beispiel 4

Difluoro-monooctylzinnchlorid.

33,8 g Octylzinntrichlorid werden in 10 ml Aceton gelöst und in eine Lösung von 12 g KF in 100 ml Wasser eingetragen. Es fällt sofort ein Niederschlag. Nach Entfernung des Acetons bei 80 °C Badtemperatur wird filtriert und getrocknet.

Ausbeute : 30,2 g (99,3 % der Theorie).

Analysen : Sn = 37,7 (theor. 38,9) Gew.-% ; F = 11,1 (12,5) % ; Cl = 9,6 (11,6) %.

Bei längerem Erhitzen der Suspension nimmt der Chloridgehalt des Produktes merklich ab.

Beispiel 5

Monobutylfluorozinnoxid.

20,87 g Butylstannonsäure (0,1 Mol) und 2 g HF (0,1 Mol), eingesetzt als 40 %ige Lösung, werden zusammengegeben. Das Gemisch wird mit Wasser soweit verdünnt, daß es rührbar bleibt und 2 Stunden auf 80 °C erhitzt. Danach wird abfiltriert und getrocknet.

Ausbeute : 21 g (quantitativ).

Analysen : Sn = 56,0 % (theor. 56,3 %) ; F = 8,2 % (theor. 9,0 %).

Beispiel 6

Monooctyldifluorozinnacetat.

55,6 g (0,1 Mol) Bis-(Mono-n-octyldifluoro)-Stannoxan werden mit 10,2 g (0,1 Mol) Essigsäureanhydrid in 120 g Essigsäure zum Sieden erhitzt. Es löst sich alles klar auf. Die Essigsäure wird abdestilliert und es verbleibt eine dickflüssige Masse von 64,5 g (98 % Ausbeute).

Auch mit weniger Essigsäure wird dasselbe Endprodukt erhalten, wobei jedoch nicht alles klar gelöst ist während der Reaktion.

Löslichkeit : 55 g in 100 g siedender Essigsäure.

Analysen : Sn = 35,3 (theor. 36,11) Gew.-% ; F = 10,8 (11,56) %.

Während der Reaktion entweicht bei überschüssigem Essigsäureanhydrid Acetylfluorid.

Beispiel 7

Monobutyldifluorozinnacetat.

48,90 g (0,11 Mol) Bis-(Monobutyldifluoro)-Stannoxan werden mit 10,2 g (0,1 Mol) Essigsäureanhydrid wie in Beispiel 6 behandelt.

Ausbeute : 52 g (95 % der Theorie) eines harten Festkörpers.

Löslichkeit : 65 g in 100 g siedender Essigsäure.

Analysen : Sn = 42,3 (theor. 43,53) Gew.-% ; F = 12,4 (13,9) %.

Schmelzbereich : Beginn ab 80 °C, aufgeschmolzen bei 117 °C.

Beispiel 8

Mono-isopropyl-fluoro-zinn-diacetat.

19,47 g (0,1 Mol) i-Propylstannonsäure werden mit 10 g 20 Gew. %iger Flußsäure (0,1 Mol) versetzt und nach Zugabe von 13,2 g Essigsäure (0,22 Mol) auf 80 °C erhitzt. Durch Anlegen eines Vakuums werden das Wasser und die überschüssige Essigsäure abdestilliert, wobei ein leichtgelber Rückstand in einer Menge von 28,67 g (96 % der theor. Gewichtsausbeute) zurückbleibt.

Analysen : Sn = 39,9 % (theor. 39,7 %) ; F = 6,16 % (theor. 6,36 %).

Die Verbindung ist wasserlöslich.

Beispiel 9

Didodecyldifluorodiacetoxydistannoxan.

32 g (0,1 Mol) Dodecylstannonsäure, 5 g 40 %iger HF (0,1 Mol) und 6 g (0,1 Mol) Essigsäure werden in 50 ml Toluol zusammengegeben und das Reaktionswasser wird azeotrop entfernt. Anschließend wird das überschüssige Toluol im Vakuum vollständig entfernt. Es verbleibt ein Rückstand von 37,4 g (100 % der theoretischen Ausbeute).

Analysen : C = 45,0 % (theor. 44,96 % ; H = 7,50 % (theor. 7,49 %) ;
Sn = 30,9 % (theor. 31,76 %) ; F = 4,93 (theor. 5,08 %).

Beispiel 10

Monododecylfluorozinndi-äthylhexanoat.

Wie in Beispiel 9 werden Dodecylstannonsäure, Flußsäure und 2-Äthylhexansäure im Molverhältnis 1 : 1 : 2 umgesetzt. Es ergibt sich eine quantitative Ausbeute an Monododecylfluorozinndiäthylhexanoat mit den Analysedaten :

C = 56,4 % (theor. 56,69 %) ; H = 9,30 % (theor. 9,28 %) ;
Sn = 20,0 % (theor. 20,03 %) ; F = 3,10 % (theor. 3,21 %).

Beispiel 11

Monooctyldifluorozinnäthylhexanoat.

26,47 g (0,1 Mol) Octylstannonsäure, 20 g 20 %iger HF (0,2 Mol) und 14,4 g (0,1 Mol) 2-Äthylhexansäure werden in 30 ml Toluol zum Sieden erhitzt, wobei sich unter azeotroper Entfernung des Wassers alles klar löst. Nach Abziehen des restlichen Toluols verbleibt ein cremefarbener Rückstand in einer Menge von 39,62 g (96 % der Theorie).

Analyse : Sn = 28,2 % (theor. 28,76 %) ; F = 9,12 % (theor. 9,21 %).

Beispiel 12

Monobutyldifluorozinnbenzoat.

Wie in Beispiel 11 werden miteinander umgesetzt 0,1 Mol butylstannonsäure 0,2 Mol Flußsäure und 0,1 Mol Benzoesäure. In 99 %iger Ausbeute ergibt sich ein gelbbrauner Feststoff mit folgenden Analysedaten :

C = 39,56 % (theor. 39,44 %) ; H = 4,50 % (theor. 4,18 %) ;
Sn = 34,9 % (theor. 35,46 %) ; F = 10,9 % (theor. 11,35 %).

Beispiel 13

Hydrophobierung von Textilien

Zur Ermittlung der hydrophobierenden Wirkung wurden Baumwolltuchstreifen mit einem $m^2$-Gewicht von 350 g in Lösungen von Monododecylfluorozinn-di-äthylhexanoat bzw. Monooctyldifluorozinnäthylhexanoat in Testbenzin getränkt und anschließend 3 Tage bei Raumtemperatur getrocknet.

Die Untersuchung der wasserabweisenden Wirkung erfolgt nach der AMTCC-Testmethode 22-1967. Als Vergleichsprodukt dient ein Silicon-Imprägnierungsmittel des Handels.

| | Konzentration auf Gewebe | Bewertungszahl |
|---|---|---|
| Monododecylfluorozinndiäthylhexanoat | 0,5 % | 100 |
| Monooctyldifluorozinnäthylhexanoat | 0,5 % | 100 |
| Silicon WS70 (Produkt der Fa-Wacker) | 0,5 % | 90 |
| ohne | — | 0 |

100 = keine Benetzung der oberen Probeseite
90 = leichtes Benetzen der oberen Probeseite an zufälligen Punkten
0 = vollständiges Benetzen der gesamten oberen und unteren Probeseiten

Beispiel 14

Hydrophobierung von mineralischem Material (Beton)

Betonwürfel der Abmessung 4 × 4 × 4 cm wurden 24 h mit einer 10 %igen Lösung von Monobutyldifluorozinn-acetat in Wasser getränkt und 3 Tage bei 23 °C mit einer relativen Luftfeuchtig-keit von 50 % getrocknet.

Anschließend wurden die Betonwürfel 7 Tage in Wasser bei Raumtemperatur gelagert und anschließend die Wasseraufnahme durch Wiegung ermittelt. Sie dient als Maß für die hydrophobierende Eigenschaft der Verbindungen.

| | durchschnittliche Wasseraufnahme nach 7 Tagen |
|---|---|
| Monobutyldifluorozinn-acetat | 0,7 g |
| ohne Mittel | 5,5 g |

**Ansprüche**

1. Monoalkylfluorozinn-Verbindungen der allgemeinen Formel

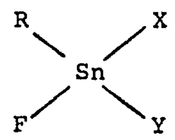

in der R ein Alkylrest mit 1 bis 12 C-Atomen ist, in der X Fluor oder Carboxylat ist, in der Y Chlor, Carboxylat oder der Rest

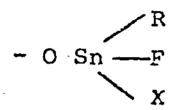

ist oder X und Y zusammen Sauerstoff sind, wobei sich die Carboxylatgruppen von aliphatischen Monocarbonsäuren mit 1 bis 12 C-Atomen oder von aromatischen Carbonsäuren ableiten.

2. Monoalkylfluorozinn-Verbindungen gemäß Anspruch 1, dadurch gekennzeichnet, daß Y der Rest

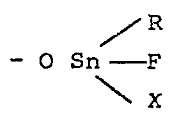

und X Fluor ist.

3. Monoalkylfluorozinn-Verbindungen gemäß Anspruch 2, in denen R Butyl oder Octyl ist.

**Claims**

1. Monoalkylfluorotin compounds of the general formula

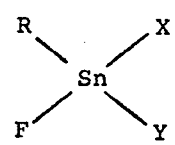

in which R represents an alkyl radical having from 1 to 12 carbon atoms, in which X represents fluorine or carboxylate, in which Y represents chlorine, carboxylate or the radical

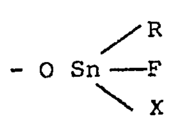

or X and Y together represent oxygen, the carboxylate groups being derived from aliphatic monocarboxylic acids having from 1 to 12 carbon atoms or from aromatic carboxylic acids.

2. Monoalkylfluorotin compounds according to claim 1, characterised in that Y represents the radical

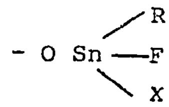

and X represents fluorine.

3. Monoalkylfluorotin compounds according to claim 2, in which R represents butyl or octyl.

**Revendications**

1. Composés monoalkyl-fluoro-stanniques répondant à la formule générale

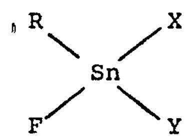

dans laquelle R représente un radical alkyle contenant de 1 à 12 atomes de carbone, X représente le fluor ou un groupe carboxylate, Y représente le chlore, un groupe carboxylate ou un radical

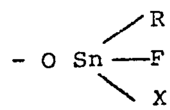

ou X et Y forment ensemble un atome d'oxygène, les groupes carboxylates dérivant d'acides monocarboxyliques aliphatiques contenant de 1 à 12 atomes de carbone ou d'acides carboxyliques aromatiques.

2. Composés monoalkyl-fluorostanniques selon la revendication 1, caractérisés en ce que Y représente un radical

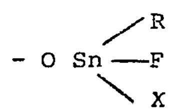

et X représente le fluor.

3. Composés monoalkyl-fluorostanniques selon la revendication 2, dans lesquels R représente un radical butyle ou octyle.